# EUROPÄISCHE PATENTSCHRIFT

(11) **EP 0 902 577 B1**
(45) Veröffentlichungstag und Bekanntmachung des Hinweises auf die Patenterteilung: **29.04.2009**
(21) Anmeldenummer: 98117078.0
(22) Anmeldetag: 09.09.1998
(51) Int. Cl.: H04M 1/00, H04M 1/72, H04M 1/02

(54) **Funkgerät**
Radiotelephone
Radiotéléphone

(30) Priorität: 10.09.1997 DE 19739676
(43) Veröffentlichungstag der Anmeldung: 17.03.1999
(73) Patentinhaber: IPCom GmbH & Co. KG, 82049 Pullach (DE)
(72) Erfinder: Drake, Jochen, 38304 Wolfenbuettel (DE)
(74) Vertreter: Gigerich, Jan

(56) Entgegenhaltungen:
- EP-A- 0 463 856
- EP-A- 0 651 544

## Beschreibung

### Stand der Technik

Die Erfindung geht von einem Funkgerät: nach der Gattung des Hauptanspruchs aus.

Aus der noch nicht vorveröffentlichten deutschen Patentanmeldung mit dem Aktenzeichen 197 05 636.9 ist bereits ein Funkgerät bekannt, das eine Anzeigevorrichtung aufweist, an der Funktionen des Funkgerätes darstellbar sind.

In EP0463856 A2 ist ein Funkgerät offenbart, welches einen Trackball oder Gleichartiges verwendet, um das im Stand der Technik verwendete Scrollen mit Hilfe von Tasten "Vorwärts" und Rückwärts" zu ersetzen.

EP0651544 A2 offenbart einen mobilen Personal Communicator mit einem Touchscreen (berührungssensitiven Display). Im Editiermode sind ein erstes Display mit einem limitierten Dateneingabebereich und eine vollständige Tastatur vorgesehen. Durch Betätigung einer vorbestimmten Taste wird der Editiermode in einen Anzeigemodus umgewandelt, welches ein zweites Display mit einem größeren Anzeigebereich aufweist. Durch Betätigung einer vorbestimmten Taste kann das erste Display wiederhergestellt werden.

Aus WO 97/29582 ist ein Mobilfunkgerät mit multifunktioneller Benutzerschnittstelle (UI, User Interface) bekannt, welches eine Ein-Hand-Bedienung ermöglicht. Die UI beinhaltet ein Display für die Darstellung einzelner Benutzerfunktionsebenen und einen beweglichen Anzeiger, ein erstes Bedienelement, welches mit dem Display für eine ausgewählte Bewegung des Anzeigers zu einer gewünschten Funktionsebene gekoppelt ist. Durch Betätigung eines zweiten oder eines dritten Bedienelementes, welches dem ersten Bedienelement gegenüberliegenden Seitenfläche angeordnet ist, kann die entsprechende Funktion aktiviert werden.

Das erfindungsgemäße Funkgerät mit den Merkmalen des Hauptanspruchs hat demgegenüber den Vorteil, dass jede Funktion des Funkgerätes mit insgesamt nur zwei Bedienelementen ausgewählt und aktiviert werden kann. Auf diese Weise werden Bedienvorrichtungen und Bedienelemente eingespart und die Bedienerführung erleichtert. Durch die in den Unteransprüchen aufgeführten Maßnahmen sind vorteilhafte Weiterbildungen und Verbesserungen des im Hauptanspruch angegebenen Funkgerätes möglich. Vorteilhaft ist dabei, daß die Anzeigevorrichtung in mindestens einen ersten Bereich zur Anzeige von Bedienfunktionen und mindestens einen zweiten Bereich zur Darstellung von Datenanzeigefunktionen aufgeteilt ist. Auf diese Weise wird die Übersichtlichkeit für den Benutzer erhöht und die Bedienerführung vereinfacht.

Vorteilhaft ist besonders, daß der Aufruf von Funktionen des Funkgerätes in Abhängigkeit von einem Betriebsmodus des Funkgerätes und der an der Anzeigevorrichtung dargestellten Informationen erfolgt. Auf diese Weise ist eine kontextsensitive Nutzung der für die Eingabe und Anzeige vorhandenen Fläche möglich, so daß die Übersichtlichkeit für den Benutzer verbessert und die Bedienerführung erleichtert wird. Es wird dadurch ein direkter Zugriff auf eine Vielzahl von Funktionen des jeweiligen Betriebsmodus ermöglicht, wobei ein solcher Zugriff wesentlich bedienerfreundlicher ist als eine Mehrfachbelegung der Tastatur.

Besonders vorteilhaft ist die Ausbildung des ersten Bedienelementes als Trackball. Auf diese Weise läßt sich eine zweidimensionale Richtungsabhängigkeit für die Betätigung des ersten Bedienelementes realisieren, so daß zweidimensional an der Anzeigevorrichtung dargestellte Funktionen durch das erste Bedienelement ausgewählt werden können. Eine solche zweidimensionale Darstellung der Funktionen an der Anzeigevorrichtung erhöht die Übersichtlichkeit und den Bedienkomfort für den Benutzer und erlaubt eine bessere Platzausnutzung bei der Anzeige der Funktionen an der Anzeigevorrichtung. Durch Verwendung eines Trackballs als erstes Bedienelement ergibt sich außerdem für den Benutzer eine gute haptische Rückmeldung bei der Bedienung des Trackballs, so daß eine besonders schnelle und gezielte Auswahl einer Funktion an der Anzeigevorrichtung möglich ist.

Vorteilhaft ist in einer alternativen Ausführung, daß das erste Bedienelement eine berührungssensitive Fläche ist, die eine Berührung auf eine an der Anzeigevorrichtung dargestellte Funktion des Funkgerätes abbildet, so daß die Funktion ausgewählt wird. Auch auf diese Weise läßt sich eine zweidimensionale Richtungsfunktion für das erste Bedienelement realisieren und dadurch die Übersichtlichkeit und die Ausnutzung des für die Anzeige der Funktionen an der Anzeigevorrichtung zur Verfügung stehenden Platzes erhöhen. Für einen erfahrenen Benutzer läßt sich über die berührungssensitive Fläche eine Funktion des Funkgerätes noch schneller gezielt auswählen.

Ein weiterer Vorteil besteht auch darin, daß durch Verwendung einer berhührungssensitiven Fläche als erstes Bedienelement die Höhe des Funkgerätes reduziert werden kann, zumal dann, wenn das zweite Bedienelement und das gegebenenfalls vorhandene dritte Bedienelement seitlich am Funkgerät angeordnet sind.

Vorteilhaft ist außerdem, daß bei Datenempfang von einer Funkstation oder Aufrufen von Menüfunktionen der Bereich zur Anzeige empfangener Daten oder verfügbarer Menüpunkte eine vorgegebene Größe nicht unterschreitet. Auf diese Weise kann die Anzeigevorrichtung bei einem Betriebsmodus, der hauptsächlich zur Darstellung von Daten dient, so aufgeteilt werden, daß möglichst viele der anzuzeigenden Daten gleichzeitig sichtbar sind, so daß eine möglichst zusammenhängende vollständige Darstellung der anzuzeigenden Daten gegeben ist.

Vorteilhaft ist weiterhin, daß bei Dateneingabe der Bereich zur Anzeige der eingegebenen Daten eine vorgegebene Größe nicht überschreitet. Bei Dateneingabe kann dem Benutzer somit eine möglichst große Anzahl von Symbolen zur Auswahl von Funktionen des Funkgerätes übersichtlich zur Verfügung gestellt werden, wobei die bei Dateneingabe lediglich für Kontrollzwecke vorgesehene Anzeigemöglichkeit der eingegebenen Daten nur eine geringe Fläche der Anzeigevorrichtung einzunehmen braucht.

Ein weiterer Vorteil besteht darin, daß das erste und das zweite Bedienelement benachbart angeordnet sind. Auf diese Weise ist eine komfortable Ein-Hand-Bedienung des Funkgerätes möglich, das heißt das Funkgerät kann in einer Handfläche gehalten werden und beispielsweise mit dem Daumen derselben Hand bedient werden.

### Zeichnung

Ausführungsbeispiele der Erfindung sind in der Zeichnung dargestellt und in der nachfolgenden Beschreibung näher erläutert. Es zeigen Figur 1 ein erfindungsgemäßes Funkgerät mit einer Anzeigevorrichtung in einer Grundeinstellung, Figur 2 ein erfindungsgemäßes Funkgerät mit einem als berührungssensitiver Fläche ausgeführten ersten Bedienelement und mit einer Anzeigevorrichtung in einer Einstellung zur Anzeige von empfangenen Daten, Figur 3 ein erfindungsgemäßes Funkgerät mit einer Anzeigevorrichtung zur Eingabe einer zu sendenden alphanumerischen Nachricht, Figur 4 ein erfindungsgemäßes Funkgerät mit einer Anzeigevorrichtung für einen Menüaufruf, Figur 5 ein erfindungsgemäßes Funkgerät mit einer Anzeigevorrichtung in einer alternativen Grundeinstellung und Figur 6 ein erfindungsgemäßes Funkgerät mit einer Anzeigevorrichtung in einer weiteren alternativen Grundeinstellung.

### Beschreibung des Ausführungsbeispiels

Die Erfindung betrifft die Ein-/Ausgabe-Schnittstelle bzw. die Bedieneroberfläche eines tragbaren Funkgerätes, beispielsweise eines Mobiltelefones oder eines Schnurlostelefones. Die Baugruppen für die Bedieneroberfläche dieser Geräte bestehen neben Mikrophon und Lautsprecher bzw. Hörer insbesondere aus einer Tastatur und einer Anzeigevorrichtung für Symbole und numerische bzw. alphanumerische Zeichen.

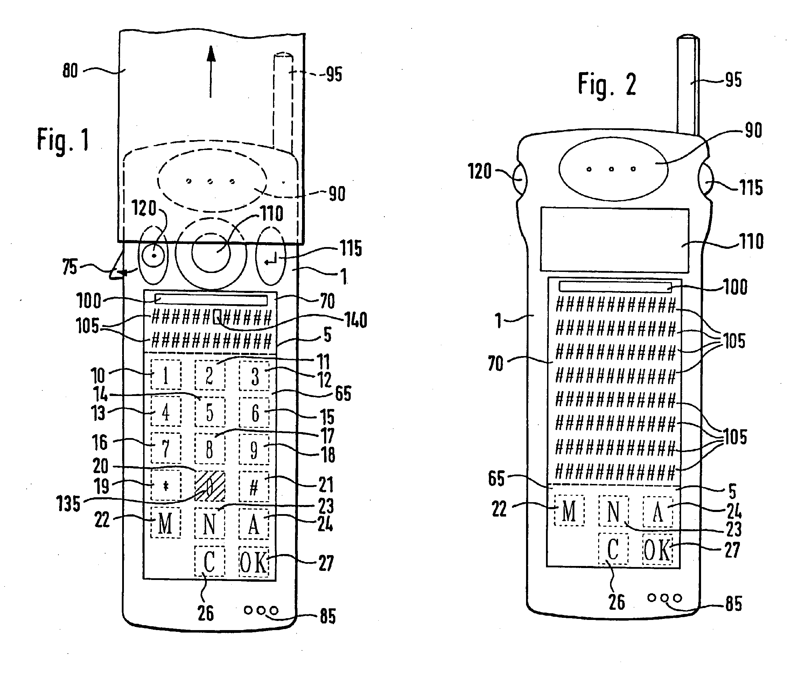

In Figur 1 kennzeichnet 1 ein als Mobiltelefon ausgebildetes Funkgerät. Das Mobiltelefon 1 weist an einer Oberfläche seines Gehäuses Lautsprecheröffnungen 90 an einem oberen Ende der Oberfläche und Mikrophonöffnungen 85 an einem unteren Ende der Oberfläche auf. Zwischen den Lautsprecheröffnungen 90 und den Mikrophonöffnungen 85 ist eine zweidimensionale Anzeigevorrichtung 5 angeordnet. Am oberen Ende des Mobiltelefons 1 ist außerdem eine Antenne 95 für die Aussendung und den Empfang von Daten vorgesehen. Zwischen den Lautsprecheröffnungen 90 und der Anzeigevorrichtung 5 ist ein als Trackball ausgebildetes erstes Bedienelement 110 etwa mittig in Bezug auf die beiden Längsseiten des Mobiltelefons 1 auf der Oberfläche des Mobiltelefons 1 angeordnet. Das erste Bedienelement 110 ist richtungsabhängig ausgebildet und ermöglicht eine zweidimensionale Bewegung einer Eingabemarkierung an der Anzeigevorrichtung 5. Rechts vom ersten Bedienelement 110 ist ein zweites Bedienelement 115 an der Oberfläche des Mobiltelefons 1 angeordnet. Links vom ersten Bedienelement 110 ist ein drittes Bedienelement 120 an der Oberfläche des Mobiltelefons 1 angeordnet, durch dessen Betätigung das Mobiltelefon 1 ein- und ausschaltbar ist.

Die Anzeigevorrichtung 5 ist in einen zweiten Bereich 70, im folgenden Anzeigebereich genannt, oberhalb etwa einer in Figur 1 gestrichelt dargestellten Linie zur Anzeige von Daten bzw. Datenanzeigefunktionen und einen ersten Bereich 65, im folgenden Funktionsbereich genannt, unterhalb dieser gestrichelten Linie zur Anzeige von Bedienfunktionen aufgeteilt. Diese Aufteilung ist kontextabhängig, d. h. sie hängt vom gerade eingestellten Betriebsmodus des Mobiltelefons 1 ab. Über die Anzeigevorrichtung 5 können sowohl empfangene oder eingegebene Daten, als auch Symbole für numerische und/oder alphanumerische Zeichen und für Befehle, wie beispielsweise Steuerungsfunktionen oder Dateneingabefunktionen zweidimensional dargestellt werden.

Die Auswahl eines auf der Anzeigevorrichtung 5 dargestellten Funktions- oder Datensymboles erfolgt dabei mit der Eingabemarkierung, die durch das erste Bedienelement 110 zweidimensional über die Anzeigevorrichtung 5 bewegt werden kann. Die an der gesamten Anzeigevorrichtung 5 mit dem ersten Bedienelment 110 bewegliche Eingabemarkierung kann beispielsweise durch einen Unterstrich 125, ein offenes Dreieck 130 oder eine farbliche Markierung 135 des ausgewählten Symbolfeldes dargestellt werden. Zur Ausführung bzw. Aktivierung einer derart ausgewählten Bedien- bzw. Datenfunktion wird das zweite Bedienelement 115 betätigt, das beispielsweise als Taste ausgebildet sein kann. Das zweite Bedienelement 115 ist dabei in unmittelbarer Nähe des ersten Bedienelements 110 angeordnet, so daß eine komfortable Ein-Hand-Bedienung realisiert werden kann.

Figur 1 zeigt die Anzeigevorrichtung 5 in einer Grundeinstellung. Eine Aktivierung bzw. das Einschalten des Mobiltelefons 1 erfolgt dabei durch das Entfernen einer Schutzabdeckung 80 in Pfeilrichtung nach oben gemäß Figur 1, wodurch ein Kontakt 75 beispielsweise durch Federkraft in Pfeilrichtung nach links gemäß Figur 1 betätigt wird. Eine Aktivierung des Mobiltelefons 1 kann jedoch auch durch Datenempfang von einer Funkanlage erfolgen. Eine weitere Möglichkeit zur Aktivierung des Mobiltelefons 1 besteht in der Betätigung des dritten Bedienelementes 120, das beispielsweise als Taste ausgebildet sein kann. Eine Deaktivierung bzw. das Ausschalten des Mobiltelefons 1 erfolgt dann analog durch Einschieben des Mobiltelefons 1 in die Schutzabdeckung 80, wobei der Kontakt 75 entgegen der in Figur 1 dargestellten Pfeilrichtung eingedrückt wird. Eine Deaktivierung kann auch durch Betätigung des dritten Bedienelementes 120 erfolgen. Die Schutzabdeckung 80 kann also neben dem mechanischen Schutz des Mobiltelefons 1 auch der Aktivierung des Mobiltelefons 1 dienen.

Die Grundeinstellung der Anzeigevorrichtung 5 gemäß Figur 1 umfaßt im Anzeigebereich 70 eine Symbolzeile 100 zur Darstellung der Empfangsfeldstärke, des Akkumulatorladezustandes, der Uhrzeit und/oder dergleichen. Weiterhin umfaßt der Anzeigebereich 70 zwei Textzeilen 105 zur Darstellung von jeweils zwölf Zeichen. Der Funktionsbereich 65 umfaßt Symbolfelder 10, 11, ..., 18, 20 für numerische Zifferneingaben der Ziffern 1, 2, ..., 9, 0, ein Symbolfeld 19 als Sterntaste, ein Symbolfeld 21 als Rautentaste, ein Schaltsymbol 23 zur Umschaltung auf numerische Eingabe, ein Schaltsymbol 24 zur Umschaltung auf alphanumerische Eingabe, ein Schaltsymbol 22 für den Aufruf eines Bedienmenüs, ein Schaltsymbol 26 zum Löschen einer zuvor getätigten Eingabe und zum Löschen einer Funkverbindung und ein Schaltsymbol 27 zur Bestätigung einer zuvor getätigten Eingabe und zur Aufnahme einer Funkverbindung.

Durch Betätigung des Trackballs 110 kann die Eingabemarkierung über die gesamte Anzeigevorrichtung 5, das heißt sowohl im Anzeigebereich 70 als auch im Funktionsbereich 65 bewegt werden. Dabei wird die Eingabemarkierung im Anzeigebereich 70 als Unterstrich 125 unter jeweils einem Zeichen der Textzeilen 105 und im Funktionsbereich 65 als farbliche Markierung 135 eines Schaltsymbols oder Symbolfeldes dargestellt. Dabei wurde im Ausführungsbeispiel gemäß Figur 1 durch Bewegung des Trackballs 110 zunächst das siebte Zeichen der oberen der beiden Textzeilen 105 ausgewählt und durch Betätigung des zweiten Bedienelementes 115 bestätigt. Das entsprechend aktivierte Zeichen wird dann zusätzlich beispielsweise durch einen blinkenden Rahmen 140 markiert. Anschließend wurde die Eingabemarkierung durch Betätigung des Trackballs 110 in den Funktionsbereich 65 verschoben, so daß im Anzeigebereich 70 kein Unterstrich 125 mehr sichtbar ist. Im Funktionsbereich 65 wurde das Symbolfeld 20 zur Darstellung der Ziffer 0 ausgewählt und durch die farbliche Markierung 135 markiert. Erfolgt nun eine Betätigung des zweiten Bedienelementes 115, so wird die Ziffer 0 an der durch den blinkenden Rahmen 140 markierten Stelle der entsprechenden Textzeile 105 eingefügt. Anschließend wird das rechts benachbarte Zeichen durch den blinkenden Rahmen 140 markiert und für die nächste Eingabe vorgesehen. Durch entsprechende Betätigung des Trackballs 110 kann jedoch ein beliebiges anderes Zeichen der Textzeilen 105 ausgewählt werden, auch ein solches Zeichen, das bereits mit einer Eingabe, beispielsweise einer Ziffer versehen wurde. Durch anschließende Betätigung des zweiten Bedienelementes 115 wird dann das entsprechend ausgewählte Zeichen für die nächste Eingabe vorgesehen und durch den blinkenden Rahmen 140 markiert. Wurde an dieser Stelle bereits eine Eingabe, beispielsweise einer Ziffer getätigt, so umschließt der blinkende Rahmen 140 diese Eingabe, andernfalls bleibt der blinkende Rahmen 140 bis zu einer Eingabe leer. Erfolgt eine Eingabe am Ende einer Zeile 105, so wird anschließend das erste Zeichen der nachfolgenden Zeile 105 durch den blinkenden Rahmen 140 markiert oder, wenn keine weitere Textzeile 105 zur Kontrolle der Eingaben vorgesehen ist, dann werden die eingegebenen Zeichen gescrollt, das heißt um eine Zeile nach links verschoben, so daß die Eingabe in der letzten Textzeile fortgesetzt werden kann.

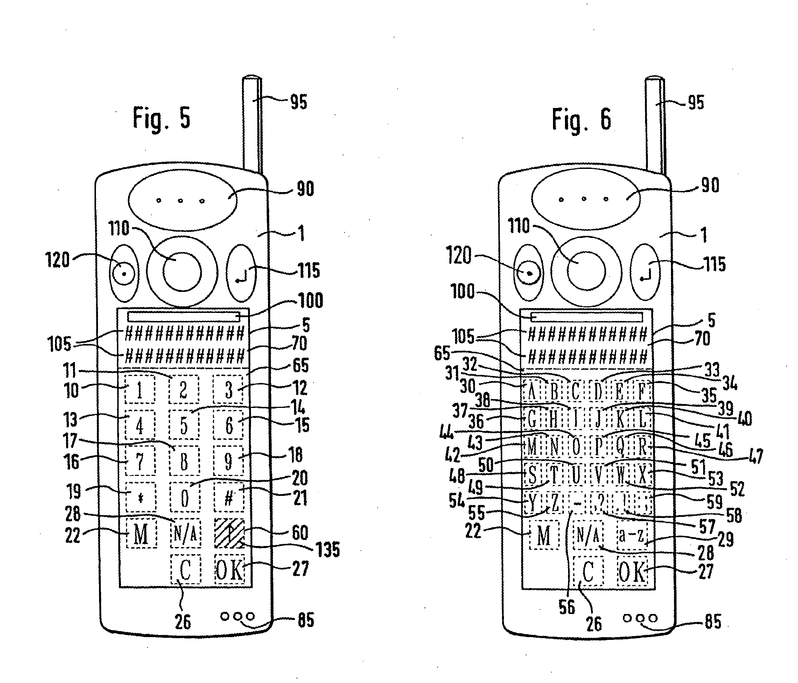

Beim Empfang einer Nachricht aus dem Funknetz wird die Anzeigevorrichtung 5 auf einen anderen Betriebsmodus zur Darstellung der empfangenen Nachricht umgeschaltet. Dabei wird der Anzeigebereich 70 um sechs Zeilen ä zwölf Zeichen erweitert und der Funktionsbereich 65 durch Wegfall der numerischen Symbolfelder 10, ..., 18, 20, des Stern-Symbolfeldes 19 und des Rauten-Symbolfeldes 21 gemäß Figur 2 verkleinert. Im Anzeigebereich 70 sind auf diese Weise sechsundneunzig Zeichen darstellbar. Bei empfangenen Nachrichten mit mehr als sechsundneunzig Zeichen kann nicht die gesamte Nachricht im Anzeigebereich 70 dargestellt werden. Sieht man jedoch im Funktionsbereich 65 ein weiteres Symbolfeld vor, so können durch Betätigung dieses weiteren Symbolfeldes bislang nicht dargestellte Empfangsdaten zur Anzeige gebracht werden. Anstelle des Schaltsymbols 23 zur Umschaltung auf numerische Eingabe und des Schaltsymbols 24 zur Umschaltung auf alphanumerische Eingabe kann gemäß Figur 5 auch ein einziges Schaltsymbol 28 zur wechselweisen Umschaltung zwischen numerischer und alphanumerischer Eingabe vorgesehen werden, so daß Platz für ein weiteres Schaltsymbol 60 geschaffen wird, das die beschriebene Umschaltung zur seitenweisen Darstellung überlanger empfangener Nachrichten durch Auswahl mittels dem ersten Bedienelement 110 und Bestätigung mittels dem zweiten Bedienelement 115 ermöglicht. Dabei stellt Figur 5 ein erfindungsgemäßes Funkgerät mit der Anzeigevorrichtung 5 in einer alternativen Grundeinstellung dar, wobei abgesehen von der beschriebenen Umgestaltung der Anzeigevorrichtung 5 mit dem Schaltsymbol 28 zur wechselweisen Umschaltung zwischen numerischer und alphanumerischer Eingabe und mit dem weiteren Schaltsymbol 60 zur seitenweisen Darstellung die Anzeigevorrichtung 5 genauso aufgebaut ist wie im Ausführungsbeispiel gemäß Figur 1. Dabei kann auch ausgehend von der Grundeinstellung gemäß Figur 1 bei Empfang einer Nachricht der verbleibende Funktionsbereich 65 gemäß der Grundeinstellung von Figur 5 umgeschaltet werden. Gemäß Figur 5 ist durch entsprechende Bewegung des Trackballs 110 das weitere Schaltsymbol 60 zur seitenweisen Darstellung ausgewählt worden.

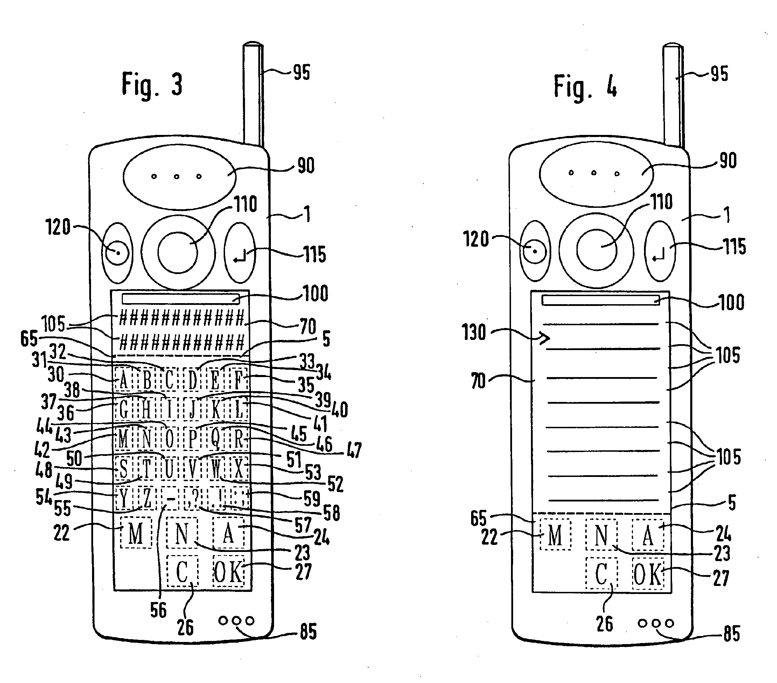

Figur 3 zeigt ein erfindungsgemäßes Funkgerät mit der Aufteilung der Anzeigevorrichtung 5 gemäß der Grundeinstellung nach Figur 1. In Figur 3 wurden jedoch durch Umschaltung auf alphanumerische Eingabe mittels Auswahl und Bestätigung des Schaltsymbols 24 die numerischen Symbolfelder 10, ..., 18, 20, das Stern-Symbolfeld 19 und das Rauten-Symbolfeld 21 durch alphanumerische Symbolfelder 30, 31, ..., 55 und Symbolfelder 56, 57, 58, 59 für Sonderzeichen ersetzt. Die alphanumerischen Symbolfelder 30, ..., 55 stellen dabei die Großbuchstaben A, B, C, ..., Z des Alphabetes dar, das Symbolfeld 56 ermöglicht die Auswahl eines Leerzeichens oder eines Bindestrichs, das Symbolfeld 57 die Eingabe eines Kommas oder eines Fragezeichens, das Symbolfeld 58 die Eingabe eines Punktes oder eines Ausrufezeichens und das Symbolfeld 59 die Eingabe eines Doppelpunktes oder eines Strichpunktes. Eine Umschaltung zwischen den alternativen Eingabemöglichkeiten der Symbolfelder 56, ..., 59 für Sonderzeichen läßt sich beispielsweise durch wiederholte Betätigung des zweiten Bedienelementes 115 realisieren. So kann abwechselnd das eine oder das andere Sonderzeichen eingegeben werden. Analog kann auch für die Umschaltung zwischen Großbuchstaben und Kleinbuchstaben bei den Symbolfeldern 30, ..., 55 für alphanumerische Eingabe verfahren werden. Eine Umschaltung zwischen Groß- und Kleinbuchstaben und zwischen zwei jeweils einem Symbolfeld 56, 57, 58, 59 zugeordneten Sonderzeichen kann auch durch ein eigens dafür vorgesehenes Schaltsymbol 29 gemäß Figur 6 realisiert werden. Für dieses Schaltsymbol 29 kann dabei gemäß Figur 5 dadurch Platz geschaffen werden, daß die Umschaltung zwischen numerischer und alphanumerischer Eingabe durch das entsprechende Schaltsymbol 28 wie bereits beschrieben erfolgt. Figur 6 stellt somit eine weitere alternative Grundeinstellung nach Umschaltung auf alphanumerische Eingabe für die Anzeigevorrichtung 5 dar.

Die Symbolfelder 30, ..., 55 zur alphanumerischen Dateneingabe und die Symbolfelder 56, ..., 59 zur Eingabe von Sonderzeichen sind mit Dateneingabefunktionen verknüpft und ermöglichen die Eingabe einer alphanumerischen Nachricht. In dem durch Umschalten auf alphanumerische Eingabe gekennzeichneten Betriebsmodus gemäß Figur 3 können jeweils vierundzwanzig Zeichen einer Nachricht im Anzeigebereich 70 eingegeben, angezeigt und durch Auswahl mittels dem Trackball 110 und Bestätigung mittels dem zweiten Bedienelement 115 in der jeweiligen Textzeile 105 editiert werden, wobei der Anzeigebereich 70 mit den beiden Textzeilen 105 und der Symbolzeile 100 im Vergleich zur Grundeinstellung gemäß Figur 1 nach wie vor unverändert ist. Eingabekorrekturen sind beispielsweise durch Auswahl und Bestätigung des Schaltsymbols 26 zum Löschen der zuletzt getätigten Eingabe möglich. Bei Nachrichten, die mehr als vierundzwanzig Zeichen umfassen, können nicht im Anzeigebereich 70 dargestellte, jedoch in einem Speicher des Mobiltelefons 1 abgelegte Zeichen dadurch zur Anzeige gebracht werden, daß der Trackball 110 bei am ersten Zeichen der obersten der Textzeilen 150 positionierten Unterstrich 125 nach links bewegt wird, um vorhergehende Textabschnitte anzuzeigen, bzw. daß der Trackball 110 bei am letzten Zeichen der untersten der Textzeilen 105 positionierten Unterstrich 125 nach rechts bewegt wird, um nachfolgende Textabschnitte zur Anzeige im Anzeigebereich 70 zu bringen.

Zur Korrektur kann das entsprechende Zeichen in einer der beiden dargestellten Textzeilen 105 durch Auswahl mittels Trackball 110 und Bestätigung mittels zweitem Bedienelement 115, wie beschrieben, selektiert und durch ein neues ebenfalls mittels Trackball 110 ausgewählten und mittels dem zweiten Bedienelement 115 bestätigten, im Funktionsbereich 65 mittels Symbolfeld dargestellten Zeichen überschrieben werden. Die Eingabe der vollständigen Nachricht wird durch entsprechende Auswahl und Betätigung der Schaltfläche 27 zur Bestätigung der Eingabe abgeschlossen, woraufhin ein Betriebsmodus zum Senden der eingegebenen Nachricht eingestellt wird, der eine Aufteilung der Anzeigevorrichtung 5 gemäß Figur 2 vorsieht und die seitenweise Darstellung des gesamten eingegebenen Textes gegebenenfalls durch die beschriebene Umschaltung mittels des entsprechenden Schaltsymbols 60 ermöglicht. Die Aussendung der Nachricht erfolgt dann im Sende-Betriebsmodus gemäß Figur 2 wiederum durch Auswahl und Betätigung des Schaltsymbols 27 zur Aufnahme einer Verbindung nach Abfrage der anzuwählenden Rufnummer. Auch in dem Sende-Betriebsmodus gemäß Figur 2 ist noch ein Editieren der eingegebenen Zeichen durch Auswahl und Bestätigung des zu korrigierenden Zeichens in der entsprechenden Textzeile 105 und damit verbundenem Rücksprung in den Eingabe-Betriebsmodus gemäß Figur 3 möglich. Im Eingabe-Betriebsmodus gemäß Figur 3 kann dann dieses Zeichen auf die beschriebene Weise durch ein neues ersetzt werden.

In Figur 2 ist das erste Bedienelement 110 als berührungssensitive Fläche ausgebildet, die eine Berührung auf eine an der Anzeigevorrichtung 5 dargestellte Funktion des Mobiltelefons 1 abbildet, so daß diese Funktion ausgewählt wird. Dabei können sowohl im Anzeigebereich 70 dargestellte Zeichen bzw. Daten über die berührungssensitive Fläche 110 als auch im Funktionsbereich 65 dargestellte Symbolfelder und Schaltsymbole durch Verwendung der beschriebenen Eingabemarkierungen ausgewählt werden. Anstelle des Trackballs kann als erstes Bedienelement 110 also gleichwirkend die berührungsensitive Fläche verwendet werden. Zur Erleichterung der Bedienerführung bei der Auswahl des gewünschten Zeichens bzw. der gewünschten Funktion ist die berührungssensitive Fläche 110 genügend groß auszubilden, so daß eine möglichst schnelle und zielgerichtete Auswahl ohne Fehlbedienung möglich ist. Dazu nimmt die berührungssensitive Fläche 110 gemäß Figur 2 einen Großteil der Oberfläche des Gehäuses des Mobiltelefons 1 zwischen den Lautsprecheröffnungen 90 und der zweidimensionalen Anzeigevorrichtung 5 ein, so daß an dieser Oberfläche kein ausreichender Platz mehr für das zweite und das dritte Bedienelement 115, 120 vorhanden ist. Daher ist das zweite Bedienelement 115 rechts von der berührungssensitiven Fläche 110 an einer Seitenfläche des Mobiltelefons 1 angeordnet und das dritte Bedienelement 120 links von der berührungssensitiven Fläche 110 an der entsprechend gegenüberliegenden Seitenfläche des Mobiltelefons 1. Auf diese Weise wird die Höhe des Mobiltelefons 1 reduziert. Um eine komfortable Ein-Hand-Bedienung des Mobiltelefons 1 zu ermöglichen, sind auch das zweite Bedienelement 115 und das dritte Bedienelement 120 der berührungssensitiven Fläche 110 benachbart, vorzugsweise in deren unmittelbarer Nähe angeordnet.

Die Eingabe an der berührungssensitiven Fläche erfolgt dabei beispielsweise durch Änderung des Widerstandes oder des Lichteinfalles bei der Berührung bestimmter Flächenelemente insbesondere mit einem Finger des Benutzers oder mit einem Stift.

Auch bei der Ausführungs des Mobiltelefons 1 mit einem Trackball als erstem Bedienelement 110 können das zweite und/oder das dritte Bedienelement 115 , 120 gemäß Figur 2 an jeweils einer Seitenfläche des Mobiltelefons 1 angeordnet sein.

Figur 4 zeigt einen Menü-Betriebsmodus, der nach Auswahl und Bestätigung des Schaltsymbols 22 zum Menüaufruf eingestellt wird und dessen Aufteilung der Anzeigevorrichtung 5 der Aufteilung gemäß Figur 2 entspricht. Die Textzeilen 105 dienen nun der Darstellung von Menüebenen, wobei gegebenenfalls eine Textzeile 105 zur Umschaltung auf weitere zunächst nicht sichtbare Menüebenen vorgesehen sein kann. Durch Betätigung des ersten Bedienelementes 110 erfolgt eine Auswahl der gewünschten Menüebene bzw. Textzeile 105 mittels des nach links offenen Dreiecks 130 als Eingabemarkierung am Zeilenanfang, wodurch weitere Untermenüs oder Menüpunkte selektiert und nach Bestätigung durch das zweite Bedienelement 115 zur Anzeige gebracht werden können. Der Aufruf von Untermenüs oder Menüpunkten erfolgt ebenfalls durch entsprechende Auswahl und Bestätiguung des gewünschten Punktes. Dabei erfolgt nach Auswahl beispielsweise eines Menüpunktes "Nachricht" oder "Telefonbuch" eine automatische kontextsensitive Umschaltung in weitere Untermenüpunkte oder in den alphanumerischen Eingabe-Betriebsmodus gemäß Figur 3 oder Figur 6, der auch für Einträge in einen Telefonbuchspeicher des Mobiltelefons 1 in analoger Weise wie für die Eingabe einer Nachricht verwendet werden kann. Die den Schaltsymbolen zugewiesenen Steuerfunktionen im Funktionsbereich 65 der Anzeigevorrichtung 5 können dem jeweils eingestellten Betriebsmodus ebenfalls beliebig angepaßt werden und die für den jeweiligen Betriebsmodus erforderlichen Steuerfunktionen verfügbar machen.

Die Anwahl eines Teilnehmers des Mobilfunknetzes erfolgt beispielsweise in der Grundeinstellung gemäß Figur 1, wobei die gewählte Rufnummer mittels der beiden Textzeilen zur Kontrolle wiedergegeben wird. Bei einem ankommenden Ruf kann beispielsweise die Rufnummer und/oder der Name des rufenden Teilnehmers ebenfalls an den beiden Textzeilen 105 zur Anzeige gebracht werden. Es ist jedoch auch zweckmäßig, den Betriebsmodus zur Anzeige von empfangenen Daten gemäß Figur 2 zur Anzeige der Rufnummer und/oder des Namens eines rufenden Teilnehmers zu verwenden, wobei dann auch weitere Hinweistexte wie beispielsweise "Externer Anruf", "Übergebener Ruf", der Name und/oder die Rufnummer eines anklopfenden oder eines aktiven Teilnehmers einer Konferenzschaltung in den Textzeilen 105 zur Anzeige gebracht werden können.

Bei der Grundeinstellung bzw. dem Eingabe-Betriebsmodus gemäß Figur 1, Figur 3, Figur 5 und Figur 6 sind nur jeweils zwei Textzeilen 105 zur Kontrolle der Eingabe vorgesehen. Werden weitere Schaltsymbole für Steuerfunktionen oder Tastenfelder für Dateneingabefunktionen benötigt, so kann auch nur eine Zeile zur Kontrolle der Eingabe zur Verfügung gestellt werden.

Zur flexiblen Gestaltung der Anzeigevorrichtung 5 mit Symbolfeldern und Schaltsymbolen ist diese vorteilhafterweise als graphikfähige Flüssigkristallanzeige ausgebildet. Die Zuordnung der Symbolfelder und Schaltsymbole zu Dateneingabefunktionen und zu Steuerfunktionen hängt vom jeweils gewählten Betriebsmodus ab. Abgesehen von der farblichen Abstufung der Anzeigevorrichtung 5 an der Stelle der Symbolfelder und Schaltsymbole werden diese in Abhängigkeit des Betriebsmodus auch mit Symbolen dargestellt, die dem Benutzer eine Zuordnung zu den mit den Symbolfeldern und Schaltsymbolen verbundenen Funktionen des Mobiltelefons 1 ermöglicht. So sind die numerischen Symbolfelder 10, ..., 18, 20 durch die entsprechende Ziffer, das Stern-Symbolfeld 19 durch einen Stern, das Rauten-Symbolfeld 21 durch eine Raute, die alphanumerischen Symbolfelder 30, ..., 55 durch die entsprechenden Buchstaben, die Symbolfelder 56, ..., 59 für Sonderzeichen durch die entsprechenden Sonderzeichen, das Schaltsymbol 22 zum Menüaufruf mit einem "M", das Schaltsymbol 23 zur Umschaltung auf numerische Eingabe durch ein "N", das Schaltsymbol 24 zur Umschaltung auf alphanumerische Eingabe durch ein "A", das Schaltsymbol 26 zur Löschung der zuletzt getätigten Eingabe und zur Löschung einer Verbindung durch ein "C", das Schaltsymbol 27 zur Bestätigung der Eingabe und zur Aufnahme der Verbindung durch "OK" das Schaltsymbol 28 zur wechselweisen Umschaltung zwischen numerischer und alphanumerischer Eingabe durch "N/A", das Schaltsymbol 29 zur wechselweisen Umschaltung zwischen Groß- und Kleinbuchstaben durch "a-z" und das Schaltsymbol 60 zur seitenweisen Umschaltung auf bislang nicht sichtbare Eingabe-, Empfangs- oder Menüdaten durch einen nach oben weisenden Pfeil gekennzeichnet.

Bei gleicher Information auf einem Symbolfeld 30,..., 59 oder einem Schaltsymbol 22, 23, 24, 25, 26, 27, 28, 29, 60 können je nach eingestelltem Betriebsmodus des Mobiltelefons 1 unterschiedliche Funktionen des Mobiltelefons 1 mit den entsprechenden Symbolfeldern 30,..., 59 und den Schaltsymbolen 22,..., 29, 60 verknüpft sein. So ist beispielsweise mit dem Schaltsymbol 26, das durch den Buchstaben "C" gekennzeichnet ist, in einen Eingabebetriebsmodus das Löschen der zuletzt getätigten Eingabe möglich, im Betriebsmodus einer Gesprächsverbindung jedoch das Löschen bzw. der Abbruch der Verbindung.

Um auch die Handhabung von Linkshändern zu berücksichtigen, ist es vorteilhaft, das zweite Bedienelement 115 doppelt auszuführen und sowohl links als auch rechts vom ersten Bedienelement 110 anzuordnen. Die Ein-/Ausschaltung des Mobiltelefons 1 kann in diesem Fall durch gleichzeitige Betätigung der beiden gleichen Bedienelemente 115 bewirkt werden, so daß das dritte Bedienelement 120 nicht benötigt wird. Die Erfindung ist auch nicht auf die beschriebenen Betriebsmodi des Mobiltelefons 1 beschränkt, sondern auf beliebige Betriebsmodi anwendbar, bei denen Daten und/oder Funktionen, die an der Anzeigevorrichtung 5 darstellbar sind, mittels des ersten Bedienelementes 110 auswählbar und mittels des zweiten Bedienelementes 115 bestätigbar bzw. aktivierbar sind.

Die Erfindung ist auch nicht nur auf Funkgeräte, die als Mobiltelefone ausgebildet sind, sondern bei allen Funkgeräten anwendbar, bei denen eine Anzeigevorrichtung 5 eingesetzt wird, beispielsweise auch bei Schnurlostelefonen, Betriebsfunkgeräten und Handfunkgeräten.

Die aufgeführten Realisierungsmöglichkeiten des ersten Bedienelementes 110 als Trackball oder als berührungssensitive Fläche ist ebenfalls nur beispielhaft. Die Erfindung erstreckt sich auch auf alle anderen gleichwirkenden dem Fachmann bekannten Realisierungsmöglichkeiten für ein richtungsabhängiges erstes Bedienelement 110, beispielsweise auch auf einen Joystick.

## Patentansprüche

1. Funkgerät (1), beispielsweise Mobilfunkgerät oder Schnurlostelefon, mit einer Anzeigevorrichtung (5), an der Funktionen des Funkgerätes (1) darstellbar sind, mit einem richtungsabhängigen ersten Bedienelement (110), durch dessen Betätigung an der Anzeigevorrichtung (5) eine Eingabemarkierung in zumindest eine Richtung bewegbar ist, so dass eine an der Anzeigevorrichtung (5) dargestellte Funktion auswählbar ist und mit einem zweiten Bedienelement (115), durch dessen Betätigung eine an der Anzeigevorrichtung (5) ausgewählte Funktion aktivierbar ist, **dadurch gekennzeichnet, dass** die Anzeigevorrichtung (5) in mindestens einen ersten Bereich (65) zur Anzeige von Bedienfunktionen und mindestens zweiten Bereich (70) zur Darstellung von Daten und/oder Datenanzeigefunktionen aufgeteilt ist, wobei die Aufteilung von einem gerade eingestellten Betriebsmodus abhängt, wobei das Funkgerät derart gestaltet ist, dass bei einem Empfang einer Nachricht aus einem Funknetz die Anzeigevorrichtung (5) auf einen Betriebsmodus zur Darstellung der empfangenen Nachricht umgeschaltet wird, bei dem der Bereich (70) zur Anzeige empfangener Daten eine vorgegebene Größe nicht unterschreitet, und dass bei Dateneingabe der Bereich (70) zur Anzeige der eingegebenen Daten eine vorgegebene Größe nicht überschreitet.

2. Funkgerät (1) nach Anspruch 1, **dadurch gekennzeichnet, dass** die Anzeigevorrichtung in mindestens einen ersten Bereich (65) zur Anzeige von Bedienfunktionen und mindestens einen zweiten Bereich (70) zur Darstellung von Datenanzeigefunktionen aufgeteilt ist.

3. Funkgerät (1) nach Anspruch 1 oder 2, **dadurch gekennzeichnet, dass** ein Aufruf von Funktionen des Funkgerätes (1) kontextsensitiv in Abhängigkeit von einem Betriebsmodus des Funkgerätes (1) und der an der Anzeigevorrichtung (5) dargestellten Informationen erfolgt.

4. Funkgerät (1) nach Anspruch 1, 2 oder 3, **dadurch gekennzeichnet, dass** das erste Bedienelement (110) ein Trackball ist.

5. Funkgerät (1) nach Anspruch 1, 2 oder 3, **dadurch gekennzeichnet, dass** das erste Bedienelement (110) eine berührungssensitive Fläche ist, die eine Berührung auf eine an der Anzeigevorrichtung (5) dargestellte Funktion des Funkgerätes (1) abbildet, so dass die Funktion ausgewählt wird.

6. Funkgerät (1) nach einem der vorherigen Ansprüche, **dadurch gekennzeichnet, dass** ein drittes Bedienelement (120) vorgesehen ist, durch dessen Betätigung das Funkgerät (1) ein- und ausschaltbar ist.

7. Funkgerät (1) nach einem der vorherigen Ansprüche, **dadurch gekennzeichnet, dass** das erste und das zweite Bedienelement (110, 115) benachbart vorzugsweise in unmittelbarer Nähe angeordnet sind.

## Claims

1. Radio apparatus (1), for example a mobile radio or cordless telephone, having a display apparatus (5) which can be used to show functions of the radio apparatus (1), having a direction-dependent first control element (110), the operation of which allows an input marker to be moved in at least one direction on the display apparatus (5), so that a function shown on the display apparatus (5) can be selected, and having a second control element (115), the operation of which allows a function selected on the display apparatus (5) to be activated, **characterized in that** the display apparatus (5) is split into at least one first area (65) for displaying control functions and at least one second area (70) for showing data and/or data display functions, the split being dependent on a currently set mode of operation, wherein the radio apparatus is in a form such that when a message is received from a radio network the display apparatus (5) is changed over to a mode of operation for showing the received message in which the area (70) for displaying received data is not below a prescribed size, and **in that** for data input the area (70) for displaying the input data is not above a prescribed size.

2. Radio apparatus (1) according to Claim 1, **characterized in that** the display apparatus is split into at least one first area (65) for displaying control functions and at least one second area (70) for showing data display functions.

3. Radio apparatus (1) according to Claim 1 or 2, **characterized in that** functions of the radio apparatus (1) are called in context-sensitive fashion on the basis of a mode of operation of the radio apparatus (1) and the information shown on the display apparatus (5).

4. Radio apparatus (1) according to Claim 1, 2 or 3, **characterized in that** the first control element (110) is a trackball.

5. Radio apparatus (1) according to Claim 1, 2 or 3, **characterized in that** the first control element (110) is a touch-sensitive surface which maps a touch onto a function of the radio apparatus (1) which is shown on the display apparatus (5), so that the function is selected.

6. Radio apparatus (1) according to one of the preceding claims, **characterized in that** a third control element (120) is provided, operation of which allows the radio apparatus (1) to be switched on and off.

7. Radio apparatus (1) according to one of the preceding claims, **characterized in that** the first and second control elements (110, 115) are arranged adjacently, preferably in direct proximity.

## Revendications

1. Dispositif de radio (1), par exemple dispositif de radio mobile ou téléphone sans fil, comportant un dispositif d'affichage (5), sur lequel des fonctions du dispositif de radio (1) peuvent être représentées, comportant un premier élément de manipulation (110) sensible aux directions, au moyen de l'actionnement duquel un marquage de saisie peut être déplacé dans au moins une direction sur le dispositif d'affichage (5), de telle sorte qu'une fonction représentée sur le dispositif d'affichage (5) puisse être sélectionnée, et comportant un deuxième élément de manipulation (115), au moyen de l'actionnement duquel une fonction sélectionnée sur le dispositif d'affichage (5) peut être activée, **caractérisé en ce que** le dispositif d'affichage (5) est divisé en au moins une première zone (65) pour l'affichage de fonctions de manipulation et au moins une deuxième zone (70) pour l'affichage de données et/ou de fonctions d'affichage de données, moyennant quoi la division dépend d'un mode de fonctionnement qui vient juste d'être réglé, moyennant quoi le dispositif de radio peut être configuré de telle sorte que lors d'une réception d'une information provenant du réseau de radiotéléphonie, le dispositif d'affichage (5) commute sur un mode de fonctionnement permettant de représenter l'information reçue, dans lequel la zone (70) d'affichage des données reçues ne passe pas en dessous d'une taille prescrite, et **en ce que** lors de la saisie de données, la zone (70) d'affichage des données entrées ne dépasse pas une taille prescrite.

2. Dispositif de radio (1) selon la revendication 1, **caractérisé en ce que** le dispositif d'affichage est divisé en au moins une première zone (65) pour l'affichage des fonctions de manipulation et au moins une deuxième zone (70) pour la représentation des fonctions d'affichage de données.

3. Dispositif de radio (1) selon la revendication 1 ou 2, **caractérisé en ce qu'**un appel des fonctions du dispositif de radio (1) a lieu de manière sensible aux contexte en fonction d'un mode de fonctionnement du dispositif de radio (1) et des informations représentées sur le dispositif d'affichage (5).

4. Dispositif de radio (1) selon la revendication 1, 2 ou 3, **caractérisé en ce que** le premier élément de manipulation (110) est une boule de commande.

5. Dispositif de radio (1) selon la revendication 1, 2 ou 3, **caractérisé en ce que** le premier élément de manipulation (110) est une surface sensible au contact, qui reproduit un contact sur une fonction représentée sur le dispositif d'affichage (5) du dispositif de radio (1), de telle sorte que la fonction soit sélectionnée.

6. Dispositif de radio (1) selon une des revendications précédentes, **caractérisé en ce qu'**un troisième élément de manipulation (120) est prévu, au moyen de l'actionnement duquel le dispositif de radio (1) peut être mise en service et hors service.

7. Dispositif de radio (1) selon une des revendications précédentes, **caractérisé en ce que** le premier et le deuxième élément de manipulation (110, 115) sont disposés en adjacence, de préférence à proximité immédiate.
